(19) Europäisches Patentamt
European Patent Office
Office européen des brevets

(11) **EP 2 201 713 B1**

(12) **EUROPEAN PATENT SPECIFICATION**

(45) Date of publication and mention
of the grant of the patent:
**20.03.2013 Bulletin 2013/12**

(21) Application number: **08835760.3**

(22) Date of filing: **01.10.2008**

(51) Int Cl.:
*H04L 1/16* (2006.01)      *H04L 1/00* (2006.01)

(86) International application number:
**PCT/US2008/078370**

(87) International publication number:
**WO 2009/046052 (09.04.2009 Gazette 2009/15)**

(54) **METHOD AND APPARATUS FOR UPLINK CONTROL SIGNALING**

VERFAHREN UND VORRICHTUNG ZUR AUFWÄRTSSTRECKENSTEUERSIGNALISIERUNG

PROCÉDÉ ET APPAREIL DE SIGNALISATION DE CONTRÔLE DE LIAISON MONTANTE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **01.10.2007 US 976760 P**
**29.09.2008 US 240117**

(43) Date of publication of application:
**30.06.2010 Bulletin 2010/26**

(73) Proprietor: **QUALCOMM Incorporated San Diego, CA 92121 (US)**

(72) Inventors:
• **FAN, Zhifei**
**San Diego, California 92121 (US)**
• **XU, Hao**
**San Diego, California 92121 (US)**

(74) Representative: **Heselberger, Johannes Bardehle Pagenberg Partnerschaft Patentanwälte, Rechtsanwälte Prinzregentenplatz 7 81675 München (DE)**

(56) References cited:
**EP-A2- 1 811 701      WO-A1-2009/011511**

• **NOKIA SIEMENS NETWORKS ET AL: "UL/DL resource allocation signaling errors and their impact to UL multiplexing design" 3GPP DRAFT; R1-073013, 3RD GENERATION PARTNERSHIP PROJECT (3GPP),, vol. RAN WG1, no. Orlando, USA; 20070620, 20 June 2007 (2007-06-20), XP050106677 [retrieved on 2007-06-20]**
• **NOKIA SIEMENS NETWORKS ET AL: "UL/DL resource allocation signaling errors and their impact to UL multiplexing design" 3GPP DRAFT; R1-073655, 3RD GENERATION PARTNERSHIP PROJECT (3GPP),, vol. RAN WG1, no. Athens, Greece; 20070815, 15 August 2007 (2007-08-15), XP050107251 [retrieved on 2007-08-15]**
• **LG ELECTRONICS: "On the design of CQI coding in PUCCH" 3GPP DRAFT; R1-080548_LG TFCI BASED PUCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080119, 19 January 2008 (2008-01-19), XP050109057 [retrieved on 2008-01-19]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD

The present invention is related to wireless communication systems. More particularly, the present invention is related to a method and apparatus for reference signal and code book design for uplink control signaling.

BACKGROUND

Wireless communication systems are widely deployed to provide various types of communication content such as voice, data, and so on. These systems may be multiple-access systems capable of supporting communication with multiple users by sharing the available system resources (e.g., bandwidth and transmit power). Examples of such multiple-access systems include code division multiple access (CDMA) systems, time division multiple access (TDMA) systems, frequency division multiple access (FDMA) systems, and orthogonal frequency division multiple access (OFDMA) systems.

3GPP Long-term evolution (LTE) complements the success of High Speed Packet Access (HSPA) with higher peak data rates, lower latency and an enhanced broadband experience in high-demand areas. This is accomplished with the use of wider-spectrum bandwidths, Orthogonal Frequency-Division Multiple Access (OFDMA) and SC-FDMA (i.e., single carrier) air interfaces, and advanced antenna techniques. These techniques enable high spectral efficiency and an excellent user experience for a wide range of converged IP services. UMTS operators are rapidly adopting and offering IP services such as rich multimedia (e.g., video-on-demand, music download, video sharing), VoIP, PTT and broadband access to laptops and PDAs. Operators offer these services through access networks such as HSPA, HSPA+ and LTE. Evolved UMTS Terrestrial Radio Access (E-UTRA) is the air interface of 3GPP's Long Term Evolution (LTE) upgrade path for mobile networks. E-UTRA is the successor to HSDPA and HSUPA technologies specified in 3GPP releases 5, 6 and 7.

One aspect of OFDM systems is that a number of low-rate streams are transmitted in parallel instead of a single high-rate stream, since low symbol rate modulation schemes (i.e., where the symbols are relatively long compared to the channel time characteristics) exhibit less inter-symbol interference (ISI) from multipath conditions. Since the duration of each symbol is long, a guard interval is inserted between the OFDM symbols to eliminate ISI. A cyclic prefix (CP) is transmitted during the guard interval, which consists of the end of the OFDM symbol copied into the guard interval. The OFDM symbol follows the guard interval. The guard interval includes of a copy of the end of the OFDM symbol so that the receiver can integrate over an integer number of sinusoid cycles for each of the multipath signals demodulating the OFDM signal with an FFT. Spectral efficiency (i.e., the ratio of useful OFDM symbol length to the total OFDM symbol length) increases with a shorter CP. Although the guard interval contains redundant data, reducing the capacity of some OFDM systems, a long guard interval allows transmitters to be spaced farther apart in a single-frequency network (SFN), and longer guard intervals allow larger SFN cell-sizes or better coverage in mountainous regions where signal delay spread is relatively large. A short CP numerology comprises a sub-frame of 7 OFDM symbols. A long CP numerology comprises a sub-frame of 6 OFDM symbols.

In E-UTRA, when both ACK and Channel Quality Indicator (CQI) need to be transmitted within the same subframe without UL data transmission, joint coding has been proposed to encode Uplink (UL) ACK and CQI information. Ack is an abbreviation for an Acknowledgement, which is a packet message used in the Transmission Control Protocol (TCP) to acknowledge receipt of a packet. Frequency resources at the system band edges are used, where CQI+ACK information from up to 6 users for short CP numerology or 4 users for long cyclic prefix (CP) numerology are multiplexed using code division multiplexing (CDM) in frequency domain. Additional intra-TTI (transmission time interval) frequency hopping is applied to increase frequency diversity.

For the CQI or CQI+ACK transmissions, (20, n+k) block codes are used for error correction based on the numerology for short CP and long CP specified in the standard, where n is the number of CQI information bits, and k is the number of ACK information bits. Since an enhanced base node (eNB) schedules both the UL CQI transmission as well as downlink (DL) data transmission, NB knows when to expect CQI and CQI+ACK in the normal system operation.

However, when user equipment (UE) misses the downlink assignment, the UE transmits CQI alone in the scheduled resource block (RBs) but not transmitting ACK. In this case, eNB has to decide whether UE is sending CQI alone in which case eNB declares DTX for ACK or CQI+ACK where eNB detects ACK or NACK information bits. This is similar to the tri-state decoding in ACK alone case.

The eNB receiver essentially has to implement a blind decoder for two hypotheses: (a) CQI was transmitted with code rate (20, n) and (b) CQI+ACK was transmitted with code rate (20, n+k). For short code block length, typical error correction code selections are based on linear block code such as Reed-Muller code or Golay code. With conventional code design, the two code spaces have intersection, which leads to a catastrophic error rate.

EP 1811701 A2 discloses a method and an apparatus for transmitting uplink information items having various characteristics by using a single Fast Fourier Transform (FFT) block. The method includes determining whether uplink signaling information exists to be transmitted when uplink data exists to be transmitted;

multiplexing the uplink data and control information for the uplink data and transmitting multiplexed data through a first frequency resource allocated for the uplink data, when no uplink signaling information exists; multiplexing the uplink data, control information for the uplink data, and the uplink signaling information, and transmitting multiplexed data through a first frequency resource allocated for the uplink data, when the uplink signaling information exists; and transmitting the uplink signaling information through a second frequency resource allocated for the uplink signaling information, when no uplink data is to be transmitted and the uplink signaling information exists to be transmitted.

SUMMARY

The following presents a simplified summary in order to provide a basic understanding of some aspects of the disclosed aspects. This summary is not an extensive overview and is intended to neither identify key or critical elements nor delineate the scope of such aspects. Its purpose is to present some concepts of the described features in a simplified form as a prelude to the more detailed description that is presented later. The invention is defined in the independent claims.

In accordance with one or more aspects and corresponding disclosure thereof, various aspects are described in connection with defining linear code blocks for transmitting a reference signal (e.g., CQI) with or without acknowledgement (ACK) that can be blind decoded without ambiguity that causes false alarm and misdetection. If two pilot spaces are available in short cyclic prefix (CP) numerology, then a cover function applied to the pilot spaces can denote whether or not acknowledgement is included that can detected by dispreading. If one pilot space is available in long CP numerology, then coset based code design ensures that sufficient code spacing is achieved for unambiguous blind decoding.

BRIEF DESCRIPTION OF THE DRAWINGS

The features, nature, and advantages of the present disclosure will become more apparent from the detailed description set forth below when taken in conjunction with the drawings in which like reference characters identify correspondingly throughout and wherein:

FIG. 1 illustrates a block diagram of a wireless network of a transmitter and a receiver performing coding and decoding respectively of an uplink (UL) reference and acknowledgement channel;

FIG. 2 illustrates a diagram of a structure for uplink channel quality indicator (CQI) with short cyclic prefix (CP) numerology;

FIG. 3 illustrates a diagram of a structure for uplink channel quality indicator (CQI) with long cyclic prefix (CP) numerology

FIG. 4 illustrates a diagram of a hyperplane relationship constituted from linear codes (m, n) and (m, N+k) optimized as being parallel and widely spaced;

FIG. 5 illustrates a matrix of a coset based code design for (20, 8) and (20, 10 derived a best block code from a (24, 12) Golay code by puncturing columns and rows;

FIG. 6 illustrates a matrix of four coset leaders;

FIG. 7 illustrates a timing diagram of a methodology for uplink joint reference and acknowledgement coding and decoding performed by the wireless network;

FIG. 8 illustrates a block diagram of a wireless network comprising the UE and receiving base node;

FIG. 9 illustrates a block diagram of a communication system enhanced to support uplink reference and acknowledgement coding and decoding;

FIG. 10 illustrates a diagram of a multiple access wireless communication system according to one aspect for uplink reference and acknowledgement coding and decoding;

FIG. 11 illustrates a schematic block diagram of a communication system for supporting uplink reference and acknowledgement coding and decoding;

DETAILED DESCRIPTION

A transmitter in a wireless network transmits joint channel quality indicator (CQI) and data packet acknowledgement (Ack) with the same subframe without uplink data transmission, avoiding a receiver from having to implement a blind decoder with two hypotheses of either CQI or CQI+ ACK being received. Thereby a situation in which a higher error rate is encountered due to intersection between the two hypotheses. When a short cyclic prefix (CP) is appropriate, a first approach utilizes a pilot aided signaling by using two different Walsh covers for the pilots to signal CQI vs. CQI+ACK. When a long CP is appropriate with one pilot, two different code designs are provided for CQI and CQI+ACK that only optimize the code book for each mode separately, but also maximize the distance between these two code spaces. Various coset based approaches are described to search for such linear block codes. Initial results showed good codes can be found based on the coset based approach to minimize the false alarm and misdetection. Finally, although the description in this memo is only for the linear block code such as Reed Muller Code or Golay Code, the same approach can be applied to conventional convolutional code or tail biting convolutional code.

Various aspects are now described with reference to the drawings. In the following description, for purposes of explanation, numerous specific details are set forth in order to provide a thorough understanding of one or more aspects. It may be evident, however, that the various aspects may be practiced without these specific details. In other instances, well-known structures and devices are shown in block diagram form in order to facilitate describing these aspects.

As used in this application, the terms "component", "module", "system", and the like are intended to refer to a computer-related entity, either hardware, a combination of hardware and software, software, or software in execution. For example, a component may be, but is not limited to being, a process running on a processor, a processor, an object, an executable, a thread of execution, a program, or a computer. By way of illustration, both an application running on a server and the server can be a component. One or more components may reside within a process or thread of execution and a component may be localized on one computer or distributed between two or more computers.

The word "exemplary" is used herein to mean serving as an example, instance, or illustration. Any aspect or design described herein as "exemplary" is not necessarily to be construed as preferred or advantageous over other aspects or designs.

Furthermore, the one or more versions may be implemented as a method, apparatus, or article of manufacture using standard programming or engineering techniques to produce software, firmware, hardware, or any combination thereof to control a computer to implement the disclosed aspects. The term "article of manufacture" (or alternatively, "computer program product") as used herein is intended to encompass a computer program accessible from any computer-readable device, carrier, or media. For example, computer readable media can include but are not limited to magnetic storage devices (*e.g.*, hard disk, floppy disk, magnetic strips...), optical disks (*e.g.*, compact disk (CD), digital versatile disk (DVD)...), smart cards, and flash memory devices (*e.g.*, card, stick). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope of the disclosed aspects.

Various aspects will be presented in terms of systems that may include a number of components, modules, and the like. It is to be understood and appreciated that the various systems may include additional components, modules, *etc.* or may not include all of the components, modules, *etc.* discussed in connection with the figures. A combination of these approaches may also be used. The various aspects disclosed herein can be performed on electrical devices including devices that utilize touch screen display technologies or mouse-and-keyboard type interfaces. Examples of such devices include computers (desktop and mobile), smart phones, personal digital assistants (PDAs), and other electronic devices both wired and wireless.

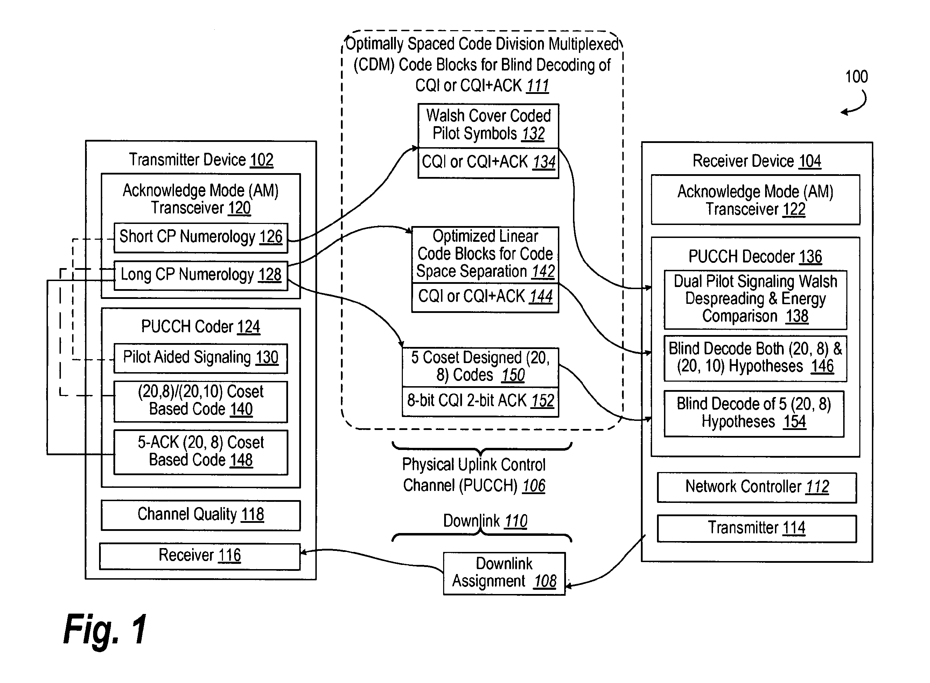

Referring initially to FIG. 1, a communication network 100 of a transmitter device 102 and a receiver device 104 facilitates unambiguous detection of an uplink reference signal, such as on a physical uplink control channel (PUCCH) 106 without the receiving device 104 knowing whether or not the transmitting device 102 received a downlink assignment 108 on a downlink channel 110. In particular, the transmitter device 102 sends optimally spaced code division multiplexed (CDM) code blocks 111 for blind decoding of CQI or CQI+Ack. In an illustrative aspect, the receiver device 104 can comprise an evolved base node (eNode B) that has a network controller 112 that uses a transmitter 114 to manage a plurality of transmitter device 102 (e.g., mobile communication devices), each monitoring for control signals with a receiver 116. To assist in managing the communication network 110, each transmitter device 102 uses a channel quality component 118 to prepare a reference signal (e.g., a channel quality indicator (CQI)) for transmission to the receiver 104. Due to mobility, changing channel states, and periodic inactive states of transmitter device 102, often the transmitter device 102 comprises an acknowledge mode (AM) transceiver 120 that acknowledges receipt of data or commands from the receiver device 104, which in turn also comprises an AM transceiver 122.

In a particular aspect, the transmitter device 102 is to transmit a CQI and an ACK in the same subframe, with inclusion of the ACK depending on whether or not the downlink assignment 108 was received. To enhance the unambiguity of whether the ACK is included or not in the PUCCH subframe, a PUCCH coder 124 employs an appropriate coding depending on whether the AM transceiver 120 is using a short CP numerology component 126 or a long CP numerology component 128. In particular for the short CP, a pilot aided signaling component 130 is used by the PUCCH coder 124 to create a Walsh cover coded Pilot Signals as depicted at 132 is incorporated accordingly for a CQI or CQI+ACK coded reference signal 134. At the receiver 104, a PUCCH decoder 136 employs a dual pilot signaling Walsh despreading and energy comparison component 138 to retrieve the CQI or CQI+ACK without ambiguity.

If long CP, then a (20,8)/(20,10) coset based code sign component 140 of the PUCCH coder 124 is used to produce an optimized linear code blocks as depicted at 142 for sending the CQI as a (20,8) linear coding block or a well code spaced CQI-ACK as a (20,10) linear code block, as depicted at 144. A blind decoder for both (20,8) and (20,10) hypotheses component 146 at the PUCCH decoder 136 unambiguously detects what has been sent.

Alternatively for a long CP, a 5-Ack (20,8) coset based code design component 148 of the PUCCH coder 124 allows selection of an appropriate 1 of 5 coset based code designed (20,8) linear code blocks depicted at 150 applied to the 8-bit CQI and 2-bit ACK as depicted at 152 for detection at the PUCCH decoder 136 by a blind decoder of (20,8) linear coding block having five offsets for the different ACK states.

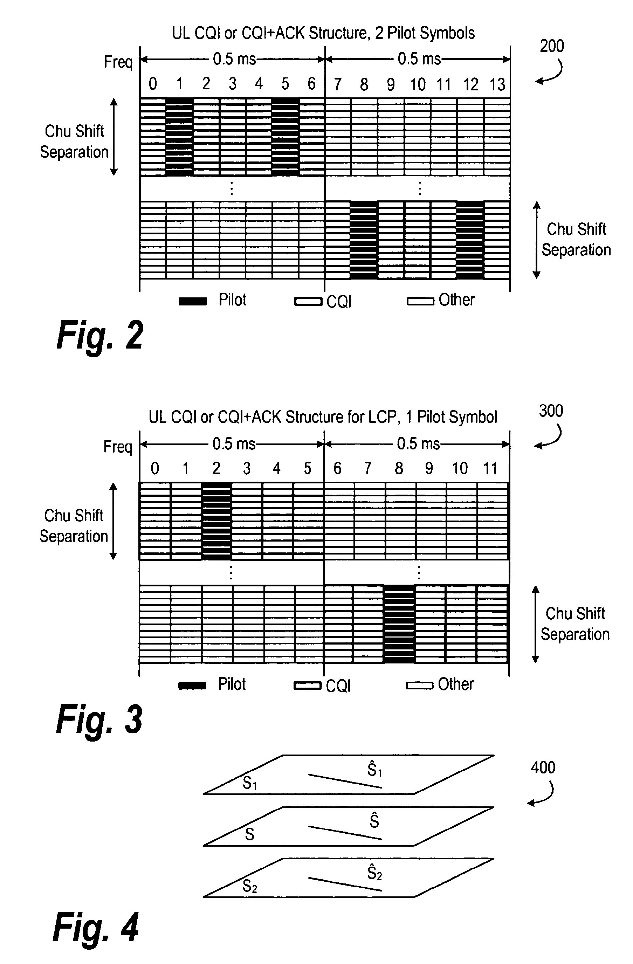

Pilot Aided Signaling. With two pilot signal symbols per slot in short cyclic prefix (CP) numerology depicted at 200 of FIG. 2, a first approach provides pilot aided signaling. As depicted in FIG. 2, an UL channel structure 200 has two pilots. Each pilot symbol could support six (6) orthogonal multiplexed users by cyclically shifting the base CAZAC sequence by offsets 2s. A constant amplitude zero autocorrelation waveform (abbreviated CAZAC) is a periodic complex-valued signal with modulus one and zero autocorrelation. This is sufficient to separate 6 CQI users based on analysis provided below.

In order to eliminate the ambiguity between CQI or CQI+ACK transmission, we could simply utilize a length two (2) Walsh cover on the pilot space. For example, we could use Walsh cover (1, 1) in two pilot symbols to indicate the CQI alone transmission and Walsh cover (1, -1) in two pilot symbols to indicate the CQI+ACK transmission. Cyclic shift hopping could still be used across two pilot symbols. In the receiver side, frequency domain despread should be done for both pilot symbols first. Then, time domain despread using both Walsh covers should be done followed by the energy comparison to decide which Walsh cover is used and therefore whether CQI or CQI+ACK are transmitted. Once the transmission mode of CQI vs. CQI+ACK is known, (20, n) or (20, n+k) decoding algorithm can be applied to decode the corresponding information.

The complexity caused by this process is the additional Walsh despread and energy comparison, which is quite trivial compared to the rest of the eNB processing. Interference estimation, channel estimation, data demodulation and decode are the same as CQI-only channel process.

If only one pilot slot is available, such as for the long CP structure 300 depicted in FIG. 3, a first alternative is provided by a Coset Based Code Design. In this approach, a coset based code design facilitates the blind decoding for the CQI or CQI+ACK channels. Using conventional linear coding schemes, one cannot distinguish between (m, n) and (m, n+k) codes because these two code spaces can be arbitrarily close. Advantageously, a design philosophy provides that an n-dimensional hyperplane constituted from code words of (m, n) code and (n+k)-dimensional hyperplane constituted from code words of (m, n+k) code should be parallel to each other and with the largest distance, overcoming this obstacle.

A design criterion for code optimization is to find two linear codes (m, n) and (m, n+k) such that the distance spectrum of each code is optimized and the distance between two hyperplanes constituted from the code words of these two codes is largest.

The brute force dimension of this optimization problem is $2^m$ in GF(2). Instead of the brute force approach to solve the problem, we exploit the coset properties of the linear block codes to find the solution.

Given optimized (m, n+k) linear block code whose elements are in GF(2), we could find the subspace $S$ with dimension $2^{(n+k)}$ spanned by the columns of the generator matrix of this block code. The $2^{(n+k)}$ vectors in this subspace could also be considered as a group $G$ with operation + and identity (0,...,0). Then we could find cosets of this group $a + G, a \notin G$ or hyperplanes which are parallel to subspace $S$. From $S$ and all the hyperplanes, we could find the two with the largest distance $S_1$ and $S_2$ or equivalently two cosets $a + G$ and $b + G$ with largest Hamming distance. From $G$ we could find a best sub-group $\hat{G}$ which is generated from a (m, n) linear block code, or equivalently a subspace $\hat{S}$ with dimension $2^n$. By best we mean in terms of the distance spectrum between code words. Then $a + \hat{G}$ is the coset of $\hat{G}$ and is a subset of $a + G$. And the $2^n$-dimensional hyperplane $\hat{S}_1$ constituted from elements of $a + \hat{G}$ lies in the $2^{(n+k)}$-dimensional hyperplane $S_1$. Obviously $\hat{S}_1$ is parallel to $S_2$ (see FIG. 4). The (m, n) linear block code with offset $a$ in $a + \hat{G}$ and (m, n+k) linear block code with offset $b$ in $b + G$ are our sub-optimal solutions. This solution gives best (m, n+k) code. But the (m, n) code obtained may not be the best because we constrained the group $\hat{G}$ to be a sub-group of $G$. The distance between hyperplanes $S_2$ constituted by (m, n+k) code and $\hat{S}_1$ by (m, n) code is the largest with respect to the (m, n+k) code according to our construction.

Another method is that given optimized (m, n) linear block code whose elements are in GF(2), we could find the subspace $\hat{S}$ with dimension $2^n$ spanned by the columns of the generator matrix of this block code. The $2^n$ vectors in this subspace could also be considered as a group $\hat{G}$ with operation + and identity (0,...0). From $\hat{G}$ we could extend it to some $G$ which are generated from (m, n+k) linear block codes, or equivalently we find $2^{(n+k)}$-dimensional subspace $S$ which contains $\hat{S}$. The criterion to find $G$ could be maximizing the minimum distance between code words. There are probably more than one $G$ with the same minimum distance. For given $S$ and $G$, we could find cosets $a + G, a \notin G$ or hyperplanes which are parallel to subspace $S$. From $S$ and all the hyperplanes, we could find the two with the largest distance $S_1$ and $S_2$ or equivalently two cosets $a + G$ and $b + G$ with largest Hamming distance. Then $a + \hat{G}$ is the coset of $\hat{G}$, which is a subset of $a + G$. And the $2^{(n+k)}$-dimensional hyperplane $\hat{S}_1$ generated from $a + \hat{G}$ lies in $2^n$-dimensional hyperplane $S_1$ Obviously $\hat{S}_1$ is parallel to $S_2$. The (m, n) linear block code with *offset a* in $a + \hat{G}$ and (m, n+k) linear block code with offset $b$ in $b + G$ are our sub-optimal solutions. This solution gives best (m, n) code. But the (m, n+k) code obtained may not be the best because we constrained the group $G$ to contain group $\hat{G}$. The distance between hyperplanes $S_2$ constituted by (m, n+k) code and $\hat{S}_1$ by (m, n) code is the largest with respect to (m, n+k) code according to our construction.

The above two methods give sub-optimal solutions of the original optimization problem. Notice that if the $2^n$-dimensional subspace generated by the best (m, n) code is not a subspace of the $2^{(n+k)}$-dimensional subspace generated by the best (m, n+k) code, then one might not get a solution where both (m, n) and (m, n+k) are optimal. In this case, there could be solutions where none of (m, n) and (m, n+k) codes are optimal (of course not too bad), but the distance between the hyperplanes constituted by these two codes is the largest.

Example of coset based code design for (20, 8) and (20, 10). We start with the (24, 12) Golay code to find the best (20, 8) linear block code by puncturing columns and rows. In fact, as shown below, the code we found has the same distance spectrum as the best linear block code. Next, we use the second method described above to find the (20, 10) linear block code with minimum distance 6. With this code, we then find the best coset, whose Hamming distance is 5 from the group generated by the best (20, 8) code.

Once the code books are specified, one can use the (20, 8) to transmit 8 bit CQI or (20, 10) code to transmit CQI+ACK. The eNB receiver has to do blind decoding of (20, 8) and (20, 10) to identify which mode was used for transmission. The coset based approach maximizes the code space separation between these two cases, thus minimizes the false alarm and misdetection.

As a second alternative, another Coset Based Code Design for long CP numerology is provided for blindly decoding of CQI and CQI+ACK. In E-UTRA, UE might send 1 bit ACK information (for 1 codeword), or 2 bits ACK information (for 2 code words) to eNB. Then total states of ACK we need to make distinct are not more than 5, which are DTX, (ACK, ACK), (ACK, NACK), (NACK, ACK) and (NACK, NACK).

Theoretically, We could find 5 disjoint (m, n) codes whose elements are in GF(2) as long as

$$\frac{2^m}{2^n} \geq 5$$

GF(2) is the Galois field (or finite field) of two elements, which are nearly always called "0" and "1". Then using these five (5) sets to represents the five (5) ACK states. The criteria of the code search should be the minimum distances of all the 5 (m, n) codes are as large as possible and the minimum distance between any pair of these (m, n) codes is as large as possible.

The brute force dimension of this optimization problem is $2^m$ in GF(2). Instead of the brute force approach to solve the problem, we exploit the coset properties of the linear block codes to find the solution. Starting with the optimal linear (m, n) code, we could find $2^{(m-n)}$ cosets which are disjoint with it. From all these cosets, we could find four of them which have the largest pair wise distances together with the original code.

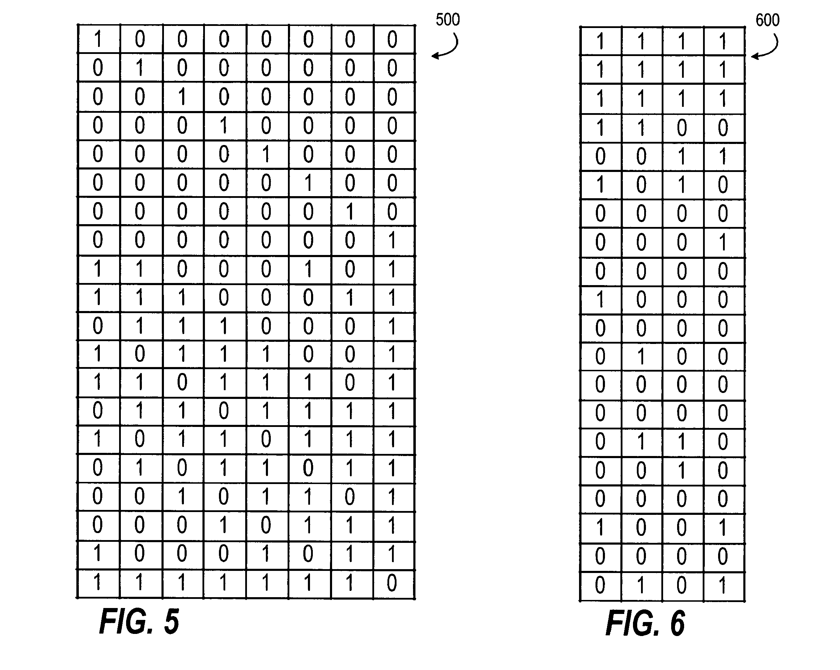

Example Code Design for (20, 8) Code. Starting with optimal (20, 8) code depicted at 500 of FIG. 5, which is punctured from the (24, 12) GOLAY code, we could find four cosets whose minimum distances are 7 to the original code, and the pair-wise distances are 6 as depicted at 600 in FIG. 6.

Once the code books are specified, one can use these five (20, 8) codes to transmit 8 bit CQI and 2 bits ACK. The eNB receiver has to do blind decoding of these five (20, 8) codes to identify which ACK bits were used for transmission. The coset based approach maximizes the code space separation between these five (20, 8) codes, thus minimizes the false alarm and misdetection.

Compared to the first coset based approach, since minimum distances between any pair of these five (20, 8) codes are six which is larger than the minimum distance between (20, 8) and (20, 10) codes we found, the false alarm and misdetection between DTX and ACK should be smaller. Since we start with the optimal (20, 8) code in this approach, all five (20, 8) codes are optimal by themselves.

Complexity wise, if we use single symbol maximum-likelihood (ML) decoding, we need to do $2^{1024} + 2^{256}$ comparisons for both approaches. In the second approach, since all five (20, 8) codes have the same structure except the different offsets; we may re-use the same decoding structure instead of creating five of them.

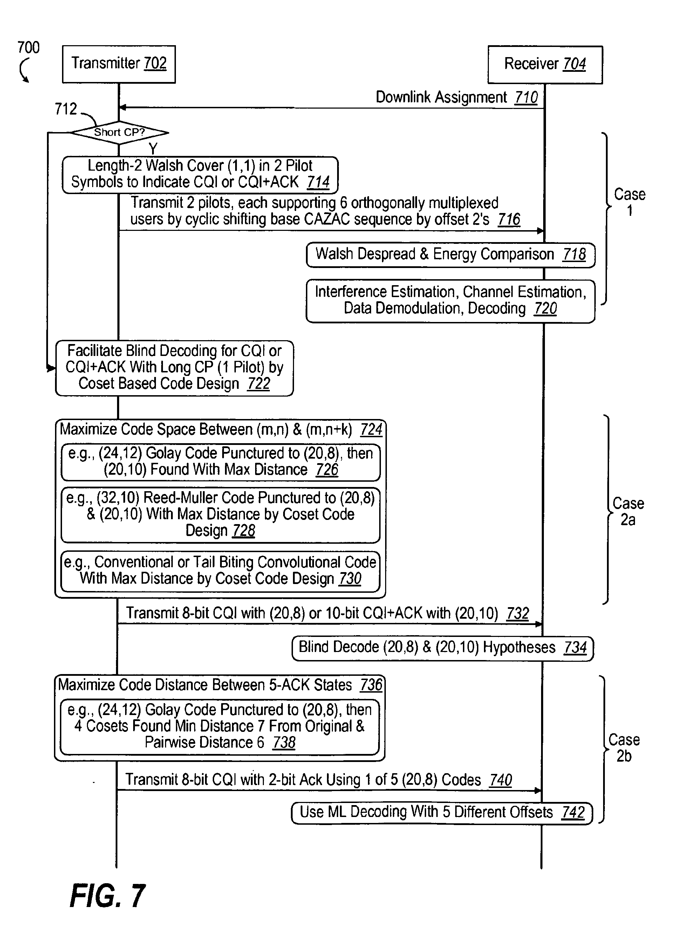

FIG. 7 illustrates methodologies and/or flow diagrams in accordance with the claimed subject matter. For simplicity of explanation, the methodologies are depicted and described as a series of acts. It is to be understood and appreciated that the subject innovation is not limited by the acts illustrated and/or by the order of acts. For example, acts can occur in various orders and/or concurrently, and with other acts not presented and described herein. Furthermore, not all illustrated acts may be required to implement the methodologies in accordance with the claimed subject matter. In addition, those skilled in the art will understand and appreciate that the methodologies could alternatively be represented as a series of interrelated states via a state diagram or events. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

Referring to FIG. 7, a methodology 700 is performed by a transmitter device 702 (e.g., mobile communication device) that uses an uplink reference channel (e.g., PUCCH) to transmit a reference signal (e.g., CQI) to a receiver device 704 (e.g., eNode B) that can be unambiguously blindly decoded. As depicted at 710, the receiver device 704 transmits a downlink assignment, which if successfully detected would prompt an acknowledgement (ACK) or at least a not acknowledged (NAK). However, when both CQI and ACK need to be transmitted within the same subframe without uplink (UL) data transmission, the receiver device 704 does not know whether or not to expect the acknowledgement along with reference signal.

As depicted at block 712, the transmitter device 702 is configured a priori to perform short cyclic prefix (CP) numerology or determines dynamically that such is the case. If so, in block 714 a length two Walsh cover (1,1) is applied to the two pilot symbols to indicate whether CQI or CQI+ACK being transmitted. Then as depicted at 716, the PUCCH transmission is made with two pilot symbols, each supporting six orthogonally multiplexed users by cyclic shifting base CAZAC sequence by offset 2's. The receiver device 704 completes this Case "1" by Walsh despreading and performing energy comparison to detect the correct hypothesis, as depicted at 718. The receiving also includes interference estimation, channel estimation, data demodulation, and decoding as depicted in block 720.

If a long CP numerology is being used (1 pilot symbol), then as depicted in block 722 then blind decoding is facilitated by the transmitter device 702 employing coset based code design to avoid ambiguity. In Case "2a", the transmitter device 702 maximizes code space between (m,n) code for CQI only from (m,n+k) for CQI+ACK. For one example, as depicted at block 726, an optimal (24,12) Golay code is punctured to (20,8) for CQI only transmission with a (20,10) found for maximum distance. For another example as depicted at block 728, an optimal (32,10) Reed-Muller code is punctured to (20,8) and (20,10), with the latter selected for maximum distance from the former by coset based code sign. As an additional aspect as depicted at 730, a conventional or tail biting convolutional code is used with maximum distance optimized by coset based code design. Then as depicted at 732, the 8-bit CQI is coded and transmitted with (20,8) linear code block or the 8-bit CQI and 2-bit ACK are coded and transmitted with the (20,10) linear code block. The receiver concludes Case 2a by blind decoding the received coded reference signal with both (20,8) and (20,10) hypotheses.

Alternatively for a long CP numerology as depicted at block 736, code distance is maximized between 5-ACK states. For example, a (24,12) Golay code is punctured to an optimal (20,8) linear code block. Then four cosets are found with a minimum distance of 7 from the original and at least a pair-wise distance of 6 as depicted in block 738. Then the 8-bit CQI and 2-bit ACK are coded and transmitted by using one of the five (20,8) linear code blocks as depicted at 740. The receiver device 704 concludes Case 2b by using maximum-likelihood (ML) decoding with the same decoding structure but with five different offsets to detect the ACK state.

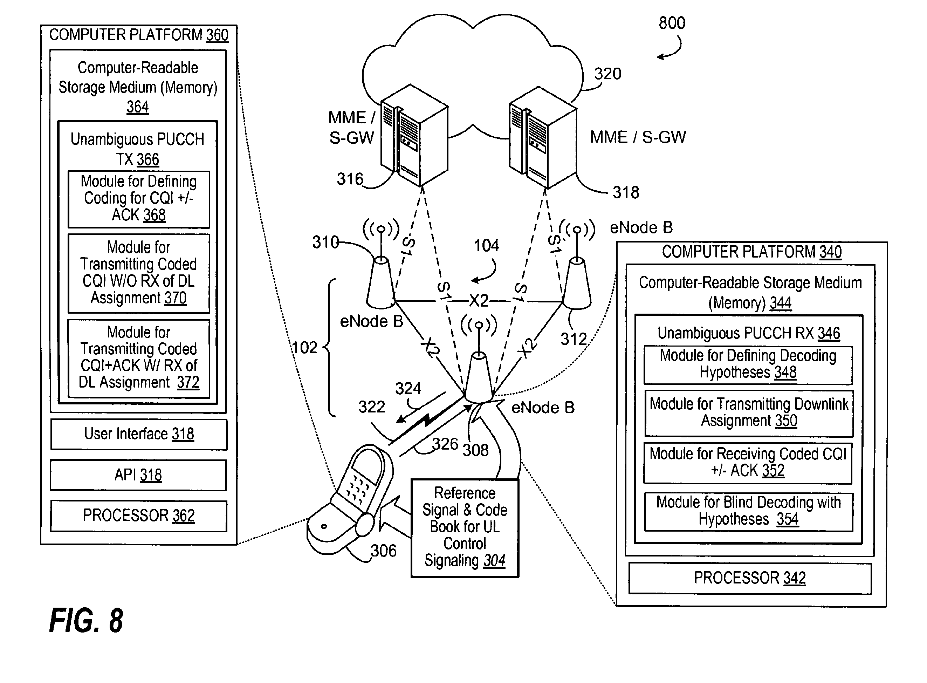

Referring to FIG. 8, in one aspect, a communication system 800 includes an evolved Universal Mobile Telecommunications System (UMTS) Terrestrial Radio Access Network (E-UTRAN) 802 that incorporates an expedited status reporting system 804 between a user equipment (UE) 806 and one evolved base node (eNB) 808, with other eNB 810, 812 also depicted, in accordance with 3GPP LTE (Third Generation Partnership Project Long Term Evolution) protocols as modified consistent with aspects herein.

The eNode Bs 808, 810, 812 provide an UMTS Terrestrial Radio Access (E-UTRA) user plane and control plane (RRC) protocol terminations towards the UE 806. The user plane can comprise of 3GPP (3rd Generation Partnership Project) Packet Data Convergence Protocol (PDCP), radio link control (RLC), medium access control (MAC) and physical layer control (PHY). The eNode B 810-112 are interconnected with each other by means of X2 interface ("X2"). The eNode Bs 808, 810, 812 are also connected by means of an S1interface ("S1") to an EPC (Evolved Packet Core), more specifically to Mobility Management Entities/ Serving Gateways (MME/S-GW) 816, 818 connected to a data packet network 820. The S1 interface supports a many-to-many relation between MMEs/S-GW 816, 818 and eNode Bs 808, 810, 812. A network interface X2 between eNodeB 808, 810, 812 is used for coordinating handovers and other functions. An air link 822 is active between eNode B 808 and the UE 806.

The eNode Bs 808, 810, 812 hosts the following functions: radio resource management: radio bearer control, radio admission control, connection mobility control, dynamic allocation of resources to UEs 806 in both uplink and downlink (scheduling); IP header compression and encryption of user data stream; selection of an MME at UE attachment; routing of user plane data towards serving gateway; scheduling and transmission of paging messages (originated from the MME); scheduling and transmission of broadcast information; and measurement and measurement reporting configuration for mobility and scheduling.

The MME hosts the following functions: distribution of paging messages to the eNode Bs 808, 810, 812; security control; idle state mobility control; System Architecture Evolution (SAE) bearer control; ciphering and integrity protection of Non-Access Stratum (NAS) signaling. The Serving Gateway hosts the following functions termination of U-plane packets for paging reasons and switching of U-plane for support of UE mobility.

An over-the-air (OTA) downlink (DL) 824 of the air link 822 from the eNode B 808 can include a plurality of communication channels relevant to download allocation. Three different types of physical (PHY) channels are defined for the LTE downlink 824. One common characteristic of physical channels is that they all convey information from higher layers in the LTE stack. This is in contrast to physical signals, which convey information that is used exclusively within the PHY layer.

LTE DL physical channels are Physical Downlink Shared Channel (PDSCH), Physical Downlink Control Channel (PDCCH), and Common Control Physical Channel (CCPCH). Physical channels map to transport channels, which are service access points (SAPs) for the L2/L3 layers. Each physical channel has defined algorithms for bit scrambling, modulation, layer mapping, cyclic delay diversity (CDD) precoding, resource element assignment; layer mapping and pre-coding are related to MIMO applications. A layer corresponds to a spatial multiplexing channel.

A Broadcast Channel (BCH) has a fixed format and is broadcast over an entire coverage area of a cell. A Downlink Shared Channel (DL-SCH) supports Hybrid ARQ (HARQ), supports dynamic link adaption by varying modulation, coding and transmit power, is suitable for transmission over entire cell coverage area, is suitable for use with beamforming, supports dynamic and semi-static resource allocation, and supports discontinuous receive (DRX) for power save. A Paging Channel (PCH) supports UE DRX, requires broadcast over entire cell coverage area, and is mapped to dynamically allocated physical resources. A Multicast Channel (MCH) is required for broadcast over entire cell coverage area, supports Multicast/broadcast - single frequency network (MB-SFN), supports semi-static resource allocation. Supported transport channels are Broadcast channel (BCH), Paging channel (PCH), Downlink shared channel (DL-SCH), and Multicast channel (MCH). Transport channels provide the following functions: structure for passing data to/from higher layers, a mechanism by which higher layers can configure the PHY status indicators (packet error, CQI etc.) to higher layers, and support for higher-layer peer-to-peer signaling. Transport channels are mapped to physical channels as follows: BCH maps to CCPCH, although mapping to PDSCH under consideration. PCH and DL-SCH map to PDSCH. MCH may be mapped to PDSCH.

A higher-level protocol or application of the transmitter (e.g., eNB 808 for DL 824 or the UE 806 for an uplink (UL) 826) has content for communication such as Internet Protocol (IP) packets that are transferred as a service data unit (SDU) to an upper level protocol, such as a Packet Data Convergence Protocol (PDCP) for functions such as ciphering that produces packet data units (PDUs). The PDCP transports the PDUs as service data units (SDUs) to a service access point of a lower layer protocol, such as a Radio Link Layer (RLC).

The PDCP and the RLC are adjacent protocols in the 'layer two' of a telecommunication system that, among other things enable ARQ (Automatic Repeat reQuest) as for example the RLC of HSPA and the RLC of LTE in 3GPP. Furthermore, aspects and techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. CDMA2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM®, etc. UTRA is part of Universal Mobile Telecommunication System (UMTS). E-UTRA is part of the 3GPP Long Term Evolution, an upcoming release of 3GPP, which employs OFDMA on the downlink and SC-FDMA on the uplink. UTRA, E-UTRA, UMTS, LTE and GSM are described in documents from an organization named "3rd Generation Partnership Project" (3GPP). CDMA2000 and UMB are described in documents from an organization named "3rd Generation Partnership Project 2" (3GPP2). These various radio technologies and standards are known in the art.

The eNode B 808 acts as transmitter and can advantageously include a computer platform 840 having at least one processor 842 for executing modules in computer-readable storage medium (memory) 844 for sending AM communication with the UE 806. An unambiguous PUCCH Component Reception 846 can comprise sets of codes and data in memory 844 executed by the processor(s) 842. In an illustrative aspect, a first module 848 defines a plurality of hypotheses for decoding of a reference signal (e.g., CQI) that may or may not include an acknowledgement (e.g., ACK). A second module 850 transmits a downlink assignment. A third module 852 subsequently receives a coded reference signal that may or may not include an acknowledgement. A fourth module 854 blind decodes the received coded reference signal using each of the plurality of hypotheses without ambiguity.

The UE 806 acts as receiver and can advantageously include a computer platform 860 having at least one processor 862 for executing modules in a computer-readable storage medium (memory) 864 for receiving AM communication from the eNode B 808. The processor(s) 862 may be an application-specific integrated circuit (ASIC), or other chipset, processor, logic circuit, or other data processing device. An unambiguous PUCCH Component Transmission 866 can comprise sets of codes and data in memory 864 executed by the processor(s) 862. In an illustrative aspect, a first module 868 defines coding of a reference signal and a combined reference signal and acknowledgement. A second module 870 transmits coded reference signal (e.g., CQI) in response to a scheduled resource block in response to not receiving a downlink assignment. A third module 872 transmits coded combined reference signal and acknowledgement in response to receiving the downlink assignment, wherein the defined coding provides for detecting either the coded reference signal or coded combined reference signal and acknowledgement by blind decoding hypotheses without ambiguity.

The memories 844, 864 can comprise volatile and nonvolatile memory portions, such as read-only and/or random-access memory (RAM and ROM), erasable programmable read-only memory (EPROM), electrically erasable programmable read-only memory (EEPROM), flash memory, and/or any memory common to computer platforms. Further, memory may include active memory and storage memory, including an electronic file system and any secondary and/or tertiary storage device, such as magnetic media, optical media, tape, soft and/or hard disk, and removable memory components.

In an illustrative aspect, the UE 806 may comprise a mobile wireless and/or cellular telephone. Alternatively, the UE 806 may comprise a fixed communication device, such as a Proxy Call/Session Control Function (P-CSCF) server, a network device, a server, a computer workstation, etc. It should be understood that UE 806 is not limited to such described or illustrated devices, but may further include a Personal Digital Assistant (PDA), a two-way text pager, a portable computer having a wired or wireless communication portal, and any type of computer platform having a wired and/or wireless communications portal. Further, the UE 806 can be a remote-slave or other similar device, such as remote sensors, remote servers, diagnostic tools, data relays, and the like, which does not have an end-user thereof, but which simply communicates data across a wireless or wired network. In alternate aspects, the UE 806 may be a wired communication device, such as a landline telephone, personal computer, set-top box or the like. Additionally, it should be noted that any combination of any number of UE 806 of a single type or a plurality of the aforementioned types may be utilized in a cellular communication system (not shown). Therefore, the present apparatus and methods can accordingly be performed on any form of wired or wireless device or computer module, including a wired or wireless communication portal, including without limitation, wireless modems, Personal Computer Memory Card International Association (PCMCIA) cards, access terminals, personal computers, telephones, or any combination or sub-combination thereof. Additionally, the UE 806 may include a user interface 874.

It should be appreciated that the user interface 874 can include an input device operable to generate or receive a user input into the UE 806, and an output device operable to generate and/or present information for consumption by the user of the UE 806. For example, input device may include at least one device such as a keypad and/or keyboard, a mouse, a touch-screen display, a microphone in association with a voice recognition module, etc. Further, for example, output device may include a display, an audio speaker, a haptic feedback mechanism, etc. Output device 506 may generate a graphical user interface, a sound, a feeling such as a vibration or a Braille text producing surface, etc.

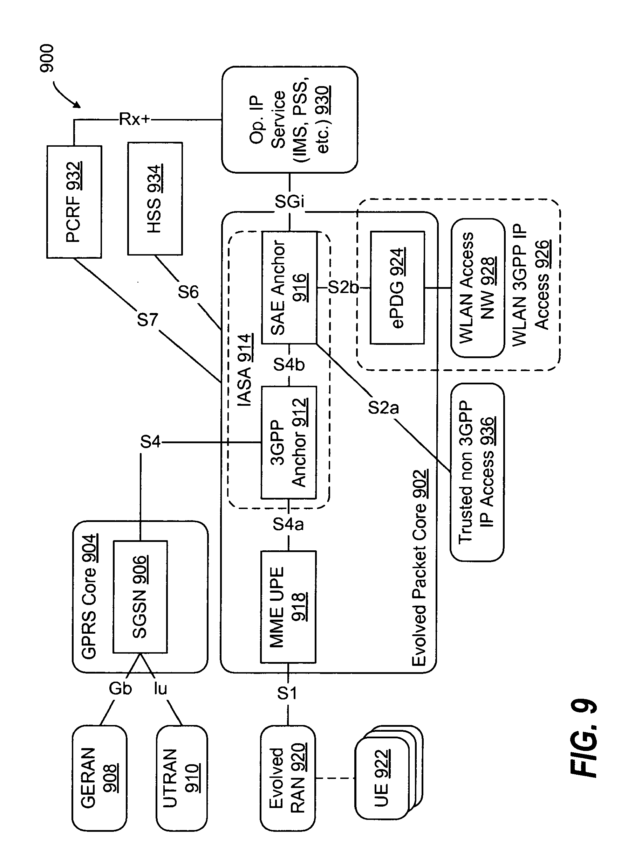

In FIG. 9, in another aspect, a communication system 900 that can support the communication network 100 of FIG. 1 includes support for interfacing an evolved packet core 902 via an interface S4 with a legacy General Packet Radio Service (GPRS) core 904, whose Serving GPRS Support Node (SGSN) 906 is interfaced in turn by a Gb interface to a Global System for Mobile Communications (GSM)/Edge Radio Access Network (GERAN) 908 and via an lu interface to a UTRAN 910.

It should be appreciated with the benefit of the present disclosure that GPRS Support Nodes (GSN) are network nodes that support the use of GPRS in the GSM core network. There are two key variants of the GSN including Gateway GPRS Support Node (GGSN) and Serving GPRS Support Node (SGSN). A GGSN can provide an interface between the GPRS backbone network and the external packet data networks (radio network and the IP network). It can convert GPRS packets coming from the SGSN into the appropriate packet data protocol (PDP) format (e.g. IP or X.25) and send the converted packets them to the corresponding packet data network. In the other direction, PDP addresses of incoming data packets may be converted to the GSM address of a destination user. The readdressed packets may then be sent to the responsible SGSN. For this purpose, the GGSN can store the current SGSN address of the user and his or her profile in its location register. The GGSN can provide IP address assignment and is generally the default router for a particular UE.

In contrast, an SGSN can be responsible for the delivery of data packets from/to mobile stations within its geographical service area. The tasks of an SGSN can include packet routing and transfer, mobility management, logical link management, authentication and charging functions.

Continuing, the GPRS tunneling protocol for the user plane (GTP-U) layer may be used on the user-plane (U-plane) and is useful for transmitting user data in a packet switched area. Packet switched networks in the Universal Mobile Telecommunications System (UMTS) are based on GPRS, and therefore, the GTP-U may also be used in the UMTS. UMTS is one of the third-generation (3G) cell phone technologies. UMTS is sometimes referred to as 3GSM, which hints at both its 3G background and the GSM standard for which it was designed to succeed.

Returning to FIG. 9, the S4 provides the user plane with related control and mobility support between GPRS Core 904 and a 3GPP Anchor 912 of an Inter Access Stratum Anchor (IASA) 914 and is based on a Gn reference point as defined between SGSN 906 and Gateway GPRS Serving/Support Node (GGSN) (not shown). The IASA 914 also includes a system architecture evolved (SAE) anchor 916 interfaced to the 3GPP anchor 912 by an S5b interface that provides the user plane with related control and mobility support. The 3GPP anchor 912 communicates with an MME UPE 918 via interface S5a. Mobility Management entity (MME) pertains to distribution of paging messages to the eNBs and User Plane Entity (UPE) pertains to IP header compression and encryption of user data streams, termination of U-plane packets for paging reasons, and switching of U-plane for support of UE mobility. The MME UPE 918 communicates via interface S1 to an evolved RAN 920 for wirelessly communicating with UE devices 922.

An S2b interface provides the user plane with related control and mobility support between the SAE Anchor 916 and an evolved Packet Data Gateway (ePDG) 924 of a wireless local access network (WLAN) 3GPP IP Access component 926 that also includes a WLAN Access network (NW) 928. An SGi interface is the reference point between the Inter AS Anchor 916 and a packet data network 930. Packet data network 930 may be an operator external public or private packet data network or an intra operator packet data network, e.g. for provision of IP Multimedia Subsystem (IMS) services. This SGi reference point corresponds to Gi and Wi functionalities and supports any 3GPP and non-3GPP access systems. An Rx+ interface provides communication between the packet data network 930 and a policy and charging rules function (PCRF) 932, which in turn communicates via an S7 interface to the evolved packet core 902. The S7 interface provides transfer of (QoS) policy and charging rules from PCRF 932 to Policy and Charging Enforcement Point (PCEP) (not shown). An S6 interface (i.e., AAA interface) enables transfer of subscription and authentication data for authenticating/authorizing user access by interfacing the evolved packet core 902 to a home subscriber service (HSS) 934. An S2a interface provides the user plane with related control and mobility support between a trusted non-3GPP IP access 936 and the SAE Anchor 916.

It should be appreciated that wireless communication systems are widely deployed to provide various types of communication content such as voice, data, and so on. These systems may be multiple-access systems capable of supporting communication with multiple users by sharing the available system resources (e.g., bandwidth and transmit power). Examples of such multiple-access systems include code division multiple access (CDMA) systems, time division multiple access (TDMA) systems, frequency division multiple access (FDMA) systems, 3GPP LTE systems, and orthogonal frequency division multiple access (OFDMA) systems.

Generally, a wireless multiple-access communication system can simultaneously support communication for multiple wireless terminals. Each terminal communicates with one or more base stations via transmissions on the forward and reverse links. The forward link (or downlink) refers to the communication link from the base stations to the terminals, and the reverse link (or uplink) refers to the communication link from the terminals to the base stations. This communication link may be established via a single-in-single-out, multiple-in-signal-out or a multiple-in-multiple-out (MIMO) system.

A MIMO system employs multiple ($N_T$) transmit antennas and multiple ($N_R$) receive antennas for data transmission. A MIMO channel formed by the $N_T$ Transmit and $N_R$ receive antennas may be decomposed into $N_S$ independent channels, which are also referred to as spatial channels, where $N_s \leq \min\{N_T, N_R\}$. Each of the $N_S$ independent channels corresponds to a dimension. The MIMO system can provide improved performance (e.g., higher throughput or greater reliability) if the additional dimensionalities created by the multiple transmit and receive antennas are utilized.

A MIMO system supports a time division duplex (TDD) and frequency division duplex (FDD) systems. In a TDD system, the forward and reverse link transmissions are on the same frequency region so that the reciprocity principle allows the estimation of the forward link channel from the reverse link channel. This enables the access point to extract transmit beamforming gain on the forward link when multiple antennas are available at the access point.

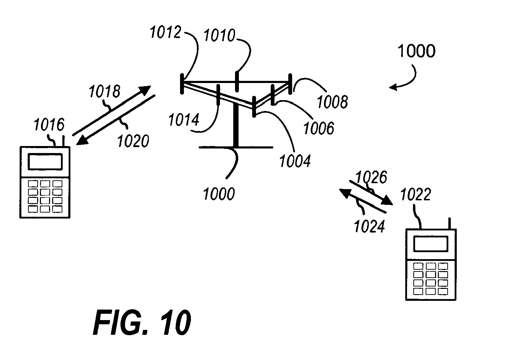

Referring to FIG. 10, a multiple access wireless communication system 1000 according to one aspect is illustrated. An access point 1000 (AP) includes multiple antenna groups, one including 1004 and 1006, another including 1008 and 1010, and an additional including 1012 and 1014. In FIG. 10, only two antennas are shown for each antenna group, however, more or fewer antennas may be utilized for each antenna group. Access terminal 1016 (AT) is in communication with antennas 1012 and 1014, where antennas 1012 and 1014 transmit information to access terminal 1016 over forward link 1020 and receive information from access terminal 1016 over reverse link 1018. Access terminal 1022 is in communication with antennas 1006 and 1008, where antennas 1006 and 1008 transmit information to access terminal 1022 over forward link 1026 and receive information from access terminal 1022 over reverse link 1024. In a FDD system, communication links 1018, 1020, 1024 and 1026 may use different frequency for communication. For example, forward link 1020 may use a different frequency then that used by reverse link 1018.

Each group of antennas or the area in which they are designed to communicate is often referred to as a sector of the access point. In the aspect, antenna groups each are designed to communicate to access terminals in a sector, of the areas covered by access point 1000.

In communication over forward links 1020 and 1026, the transmitting antennas of access point 1000 utilize beamforming in order to improve the signal-to-noise ratio of forward links for the different access terminals 1016 and 1024. In addition, an access point using beamforming to transmit to access terminals scattered randomly through its coverage causes less interference to access terminals in neighboring cells than an access point transmitting through a single antenna to all its access terminals.

An access point may be a fixed station used for communicating with the terminals and may also be referred to as an access point, a Node B, or some other terminology. An access terminal may also be called an access terminal, user equipment (UE), a wireless communication device, terminal, access terminal or some other terminology.

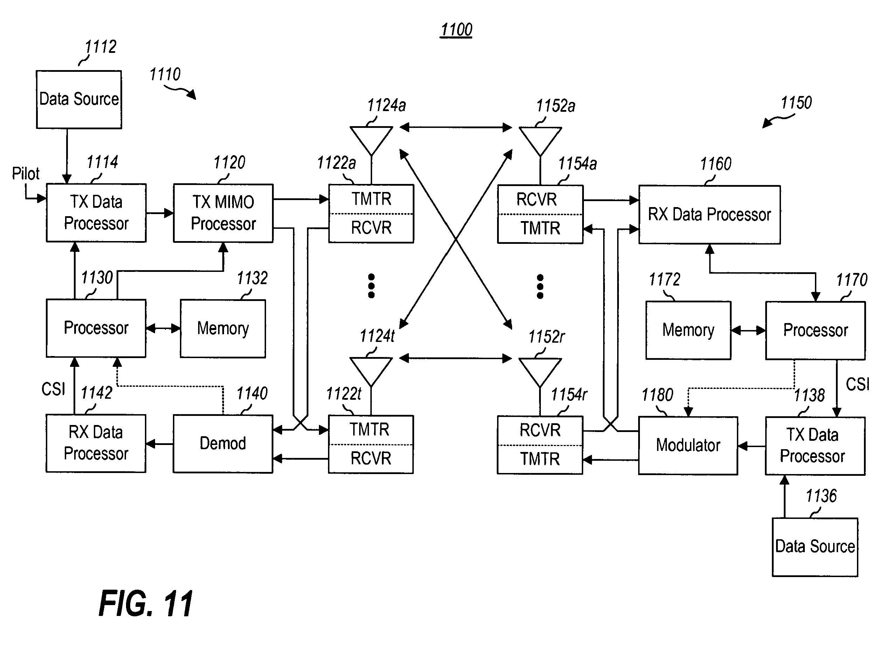

FIG. 11 is a block diagram of an aspect of a transmitter system 1.110 (also known as the access point) and a receiver system 1150 (also known as access terminal) in a MIMO system 1100. At the transmitter system 1110, traffic data for a number of data streams is provided from a data source 1112 to a transmit (TX) data processor 1114.

In an aspect, each data stream is transmitted over a respective transmit antenna. TX data processor 1114 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by processor 1130.

The modulation symbols for all data streams are then provided to a TX MIMO processor 1120, which may further process the modulation symbols (e.g., for OFDM). TX MIMO processor 1120 then provides $N_T$ modulation symbol streams to $N_T$ transmitters (TMTR) 1122a through 1122t. In certain implementations, TX MIMO processor 1120 applies beamforming weights to the symbols of the data streams and to the antenna from which the symbol is being transmitted.

Each transmitter 1122 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 1122a through 1122t are then transmitted from $N_T$ antennas 1124a through 1124t, respectively.

At receiver system 1150, the transmitted modulated signals are received by $N_R$ antennas 1152a through 1152r and the received signal from each antenna 1152 is provided to a respective receiver (RCVR) 1154a through 1154r. Each receiver 1154 conditions (e.g., filters, amplifies, and downconverts) a respective received signal, digitizes the conditioned signal to provide samples, and further processes the samples to provide a corresponding "received" symbol stream.

An RX data processor 1160 then receives and processes the $N_R$ received symbol streams from $N_R$ receivers 1154 based on a particular receiver processing technique to provide $N_T$ "detected" symbol streams. The RX data processor 1160 then demodulates, deinterleaves, and decodes each detected symbol stream to recover the traffic data for the data stream. The processing by RX data processor 1160 is complementary to that performed by TX MIMO processor 1120 and TX data processor 1114 at transmitter system 1110.

A processor 1170 periodically determines which pre-coding matrix to use (discussed below). Processor 1170 formulates a reverse link message comprising a matrix index portion and a rank value portion.

The reverse link message may comprise various types of information regarding the communication link or the received data stream. The reverse link message is then processed by a TX data processor 1138, which also receives traffic data for a number of data streams from a data source 1136, modulated by a modulator 1180, conditioned by transmitters 1154a through 1154r, and transmitted back to transmitter system 1110.

At transmitter system 1110, the modulated signals from receiver system 1150 are received by antennas 1124, conditioned by receivers 1122, demodulated by a demodulator 1 140, and processed by a RX data processor 1142 to extract the reserve link message transmitted by the receiver system 1150. Processor 1130 then determines which pre-coding matrix to use for determining the beamforming weights then processes the extracted message.

In an aspect, logical channels are classified into Control Channels and Traffic Channels. Logical Control Channels comprises Broadcast Control Channel (BCCH), which is DL channel for broadcasting system control information. Paging Control Channel (PCCH), which is DL channel that transfers paging information. Multicast Control Channel (MCCH) which is Point-to-multipoint DL channel used for transmitting Multimedia Broadcast and Multicast Service (MBMS) scheduling and control information for one or several MTCHs. Generally, after establishing RRC connection this channel is only used by UEs that receive MBMS (Note: old MCCH+MSCH). Dedicated Control Channel (DCCH) is Point-to-point bi-directional channel that transmits dedicated control information and used by UEs having an RRC connection. In aspect, Logical Traffic Channels comprises a Dedicated Traffic Channel (DTCH), which is Point-to-point bi-directional channel, dedicated to one UE, for the transfer of user information. In addition, a Multicast Traffic Channel (MTCH) for Point-to-multipoint DL channel for transmitting traffic data.

In an aspect, Transport Channels are classified into DL and UL. DL Transport Channels comprises a Broadcast Channel (BCH), Downlink Shared Data Channel (DL-SDCH) and a Paging Channel (PCH), the PCH for support of UE power saving (DRX cycle is indicated by the network to the UE), broadcasted over entire cell and mapped to PHY resources which can be used for other control/traffic channels. The UL Transport Channels comprises a Random Access Channel (RACH), a Request Channel (REQCH), an Uplink Shared Data Channel (UL-SDCH) and plurality of PHY channels. The PHY channels comprise a set of DL channels and UL channels.

The DL PHY channels comprises: Common Pilot Channel (CPICH); Synchronization Channel (SCH); Common Control Channel (CCCH); Shared DL Control Channel (SDCCH); Multicast Control Channel (MCCH); Shared UL Assignment Channel (SUACH); Acknowledgement Channel (ACKCH); DL Physical Shared Data Channel (DL-PSDCH); UL Power Control Channel (UPCCH); Paging Indicator Channel (PICH); Load Indicator Channel (LICH); The UL PHY Channels comprises: Physical Random Access Channel (PRACH); Channel Quality Indicator Channel (CQICH); Acknowledgement Channel (ACKCH); Antenna Subset Indicator Channel (ASICH); Shared Request Channel (SREQCH); UL Physical Shared Data Channel (UL-PSDCH); Broadband Pilot Channel (BPICH).

What has been described above includes examples of the various aspects. It is, of course, not possible to describe every conceivable combination of components or methodologies for purposes of describing the various aspects, but one of ordinary skill in the art may recognize that many further combinations and permutations are possible. Accordingly, the subject specification intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (*e.g.*, a functional equivalent), even though not structurally equivalent to the disclosed structure, which performs the function in the herein illustrated exemplary aspects. In this regard, it will also be recognized that the various aspects include a system as well as a computer-readable medium having computer-executable instructions for performing the acts or events of the various methods.

In addition, while a particular feature may have been disclosed with respect to only one of several implementations, such feature may be combined with one or more other features of the other implementations as may be desired and advantageous for any given or particular application. To the extent that the terms "includes," and "including" and variants thereof are used in either the detailed description or the claims, these terms are intended to be inclusive in a manner similar to the term "comprising." Furthermore, the term "or" as used in either the detailed description of the claims is meant to be a "non-exclusive or".

Furthermore, as will be appreciated, various portions of the disclosed systems and methods may include or consist of artificial intelligence, machine learning, or knowledge or rule based components, sub-components, processes, means, methodologies, or mechanisms (e.g., support vector machines, neural networks, expert systems, Bayesian belief networks, fuzzy logic, data fusion engines, classifiers ... ). Such components, inter alia, can automate certain mechanisms or processes performed thereby to make portions of the systems and methods more adaptive as well as efficient and intelligent.

In view of the exemplary systems described supra, methodologies that may be implemented in accordance with the disclosed subject matter have been described with reference to several flow diagrams. While for purposes of simplicity of explanation, the methodologies are shown and described as a series of blocks, it is to be understood and appreciated that the claimed subject matter is not limited by the *order* of the blocks, as some blocks may occur in different orders or concurrently with other blocks from what is depicted and described herein. Moreover, not all illustrated blocks may be required to implement the methodologies described herein. Additionally, it should be further appreciated that the methodologies disclosed herein are capable of being stored on an article of manufacture to facilitate transporting and transferring such methodologies to computers. The term article of manufacture, as used herein, is intended to encompass a computer program accessible from any computer-readable device, carrier, or media.

## Claims

1. A method (700) for transmitting an uplink reference signal with or without an acknowledgement that avoids false alarm and misdetection, comprising:

   defining (724) coding of a reference signal and a combined reference signal and acknowledgement;
   transmitting coded reference signal in response to a scheduled resource block in response to not receiving a downlink assignment; and
   transmitting (732) coded combined reference signal and
   acknowledgement in response to receiving the downlink assignment, **characterised in that**
   the defined coding provides for detecting either the coded reference signal or coded combined reference signal and acknowledgement by defining a plurality of linear code blocks spaced for blind decoding by coset based code design to distinguish inclusion or absence of acknowledgement,
   further comprising
   transmitting the coded reference signal and the coded combined reference signal and acknowledgement with one pilot space per transmission time interval.

2. The method of claim 1, further comprising:

   defining a (20, 8) linear code block for a reference signal only transmission by puncturing rows and columns of a (24, 12) Golay code; and defining a (20, 10) linear code block for a reference signal with acknowledgement by employing a coset based code design to optimize code distance from the (20, 8) linear code block.

3. The method of claim 1, further comprising:

   defining a (20, 8) linear code block for a reference signal only transmission by puncturing rows and columns of a (32, 10) Reed-Muller code; and

defining a (20, io) linear code block for a reference signal and

acknowledgement transmission by puncturing rows and columns of a (32, 10) Reed-Muller code employing a coset based code design to optimize code distance from the (20, 8) linear code block.

**4.** The method of claim 1, further comprising:

defining an original (20, 8) linear code block for a reference signal only transmission; and defining five (20, 8) linear code blocks for each acknowledge state to send the reference signal by finding four cosets whose minimum distances are seven to the original (20, 8) linear code block and whose minimum distances are six to other of the four cosets.

**5.** An apparatus (360) for transmitting an uplink reference signal with or without an acknowledgement that avoids false alarm and misdetection, comprising:

means (368) for defining coding of a reference signal and a combined reference signal and acknowledgement;
means (370) for transmitting coded reference signal in response to a scheduled resource block in response to not receiving a downlink assignment; and
means (372) for transmitting coded combined reference signal and acknowledgement in response to receiving the downlink assignment, **characterized in that** the defined coding provides for detecting either the coded reference signal or coded combined reference signal and acknowledgement; further comprising
means for transmitting the coded reference signal and the coded combined reference signal and acknowledgement with one pilot space per transmission time interval; and wherein the means (368)
for defining coding of a reference signal and a combined reference signal and acknowledgement further comprises
means for defining a plurality of linear code blocks spaced for blind decoding by coset based code design to distinguish inclusion or absence of acknowledgement.

**6.** The apparatus of claim 5, further comprising:

means for defining a (20, 8) linear code block for a reference signal only transmission by puncturing rows and columns of a (24, 12) Golay code; and
means for defining a (20, 10) linear code block for a reference signal with acknowledgement by employing a coset based code design to optimize code distance from the (20, 8) linear code block.

**7.** The apparatus of claim 5, further comprising:

means for defining a (20, 8) linear code block for a reference signal only transmission by puncturing rows and columns of a (32, 10) Reed-Muller code; and
means for defining a (20, 10) linear code block for a reference signal and acknowledgement transmission by puncturing rows and columns of a (32,10) Reed-Muller code employing a coset based code design to optimize code distance from the (20, 8) linear code block.

**8.** The apparatus of claim 5, further comprising:

the coder for defining an original (20, 8) linear code block for a reference signal only transmission; and
the coder for defining five (20, 8) linear code blocks for each acknowledge state to send the reference signal by finding four cosets whose minimum distances are seven to the original (20, 8) linear code block and whose minimum distances are six to other of the four cosets.

**9.** A method for receiving an uplink reference signal with or without an acknowledgement that avoids false alarm and misdetection, comprising:

defining a plurality of hypotheses for decoding of a reference signal that may or may not include an acknowledgement;
transmitting (710) a downlink assignment;
subsequently receiving a coded reference signal that may or may not include an acknowledgement; and
blind decoding (734) the received coded reference signal using each of the plurality of hypotheses without ambiguity;
**characterized by**
receiving (732) the coded reference signal with or without acknowledgement with one pilot space per transmission time interval; and
defining a hypotheses for a plurality of linear code blocks spaced by coset based code design to distinguish inclusion or absence of acknowledgement.

**10.** The method of claim 9, further comprising:

defining a hypothesis for a (20, 8) linear code block for a reference signal only transmission by puncturing rows and columns of a (24, 12) Golay code; and

defining a hypothesis for a (20,10) linear code block for a reference signal with acknowledgement by employing a coset based code design to optimize code distance from the (20, 8) linear code block.

11. The method of claim 9, further comprising:

defining a hypothesis for a (20, 8) linear code block for a reference signal only transmission by puncturing rows and columns of a (32, 10) Reed-Muller code; and defining a hypothesis for a (20, 10) linear code block for a reference signal and acknowledgement transmission by puncturing rows and columns of a (32, 10) Reed-Muller code employing a coset based code design to optimize code distance from the (20, 8) linear code block.

12. An apparatus (340) for receiving an uplink reference signal with or without an acknowledgement that avoids false alarm and misdetection, comprising:

means (348) for defining a plurality of hypotheses for decoding of a reference signal that may or may not include an acknowledgement; means (350) for transmitting a downlink assignment; means (352) for subsequently receiving a coded reference signal that may or may not include an acknowledgement; and means (354) for blind decoding the received coded reference signal using each of the plurality of hypotheses without ambiguity; **characterized by** means for receiving the coded reference signal with or without acknowledgement with one pilot space per transmission time interval; and the means (348) for defining a plurality of hypoteses for decoding of a reference signal that may or may not includes an acknowledgement further comprising means for defining a hypotheses for a plurality of linear code blocks spaced by coset based code design to distinguish inclusion or absence of acknowledgement.

13. The apparatus of claim 12, further comprising:

the decoder for defining a hypothesis for a (20, 8) linear code block for a reference signal only transmission by puncturing rows and columns of a (24, 12) Golay code; and the decoder for defining a hypothesis for a (20, 10) linear code block for a reference signal with acknowledgement by employing a coset based code design to optimize code distance from the (20, 8) linear code block.

14. The apparatus of claim 12, further comprising:

the decoder for defining a hypothesis for a (20, 8) linear code block for a reference signal only transmission by puncturing rows and columns of a (32, 10) Reed-Muller code; and the decoder for defining a hypothesis for a (20, 10) linear code block for a reference signal and acknowledgement transmission by puncturing rows and columns of a (32, 10) Reed-Muller code employing a coset based code design to optimize code distance from the (20, 8) linear code block.

15. A computer program product comprising a set of codes for executing a method according to any of claims 1 to 4 and 9 to 11.

**Patentansprüche**

1. Verfahren (700) zum Übertragen eines Aufwärtsreferenzsignals mit oder ohne einer Bestätigung, welches eine falsche Warnmeldung und Falschdetektion vermeidet, aufweisend:

Definieren (724) des Kodierens eines Referenzsignals und eines kombinierten Referenzsignals und Bestätigung; Übertragen des kodierten Referenzsignals in Antwort auf einen eingeplanten Ressourcenblock in Antwort auf das nicht Empfangen einer Abwärtszuweisung; und Übertragen (732) eines kodierten Referenzsignals und Bestätigung in Antwort auf das Empfangen der Abwärtszuweisung, **dadurch gekennzeichnet dass** das definierte Kodieren ermöglicht das Detektieren entweder des kodierten Referenzsignals oder des kodierten Referenzsignals und Bestätigung durch Definieren einer Vielzahl von linearen Code-Blocks in Abständen angeordnet für blindes Dekodieren durch Coset-basierte Code-Gestaltung zum Unterscheiden zwischen Einbeziehung oder Fehlen einer Bestätigung, und ferner aufweisend Übertragen des kodierten Referenzsignals und des kodierten kombinierten Referenzsignals und Bestätigung mit einer Pilotsignalaussparung per Übertragungszeitintervall.

2. Verfahren nach Anspruch 1, ferner aufweisend:

Definieren eines (20, 8) linearen Code-Blocks nur für die Übertragung eines Referenzsignals durch Punktieren von Reihen und Spalten eines (24, 12) Golay-Codes; und Definieren eines (20, 10) linearen Code-Blocks für ein Referenzsignal mit Bestätigung durch Verwenden einer Coset-basierten Code-Gestaltung mit Bestätigung durch Verwenden einer Coset-basierten Code- Gestaltung zum Optimieren des Abstands des Codes zum (20, 8) linearen Code-Block.

3.   Verfahren nach Anspruch 1, ferner aufweisend:

Definieren eines (20, 8) linearen Code-Blocks für die Übertragung nur eines Referenzsignals durch Punktieren von Reihen und Spalten eines (32, 10) Reed-Muller-Codes; und
Definieren eines (20, 10) linearen Code-Blocks für ein Referenzsignal und Bestätigung der Übertragung durch Punktieren von Reihen und Spalten eines (32, 10) Reed-Muller-Codes welcher ein Cosetbasiertes Code-Entwurf verwendet zum Optimieren des Code-Abstandes zum (20, 8) linearen Code-Block.

4.   Verfahren nach Anspruch 1, ferner aufweisend:

Definieren eines originalen (20, 8) linearen Code-Blocks für die Übertragung nur eines Referenzsignals; und
Definieren fünf (20, 8) linearen Code-Blocks für jeden Bestätigungszustand zum Übertragen des Referenzsignals durch Finden von vier Cosets, deren minimale Abstände sind sieben zum originalen (20, 8) linearen Code-Block und deren minimale Abstände sind sechs zu anderen vier Cosets.

5.   Vorrichtung (360) zum Übertragen eines Aufwärtsreferenzsignals mit oder ohne eine Bestätigung, welches eine falsche Warnmeldung und Falschdetektion vermeidet, aufweisend
Mittel (368) zum Definieren des Kodierens eines Referenzsignals und eines kombinierten Referenzsignals und Bestätigung;
Mittel (370) zum Übertragen des kodierten Referenzsignals in Antwort auf einen eingeplanten Ressourcenblock in Antwort auf das nicht Empfangen einer Abwärtszuweisung; und
Mittel (372) zum Übertragen eines kodierten Referenzsignals und Bestätigung in Antwort auf das Empfangen der Abwärtszuweisung, **dadurch gekennzeichnet dass**
das definierte Kodieren ermöglicht das Detektieren entweder des kodierten Referenzsignals oder des kodierten Referenzsignals und Bestätigung; ferner aufweisend
Mittel zum Übertragen des kodierten Referenzsignals und des kodierten kombinierten Referenzsignals und Bestätigung mit einer Pilotsignalaussparung per Übertragungszeitintervall; und
wobei das Mittel (368) zum Definieren des Kodierens eines Referenzsignals und eines kombinierten Referenzsignals und Bestätigung ferner aufweist
Mittel zum Definieren einer Vielzahl von linearen Code-Blocks in Abständen angeordnet für blindes Dekodieren durch Coset-basierte Code-Gestaltung zum Unterscheiden zwischen Einbeziehung oder Fehlen einer Bestätigung.

6.   Vorrichtung nach Anspruch 5, ferner aufweisend:

Mittel zum Definieren eines (20, 8) linearen Code-Blocks nur für die Übertragung eines Referenzsignals durch Punktieren von Reihen und Spalten eines (24, 12) Golay-Codes; und
Mittel zum Definieren eines (20, 10) linearen Code-Blocks für ein Referenzsignal mit Bestätigung durch Verwenden einer Coset-basierten Code-Gestaltung mit Bestätigung durch Verwenden einer Coset-basierten Code-Gestaltung zum Optimieren des Abstands des Codes zum (20, 8) linearen Code-Block.

7.   Vorrichtung nach Anspruch 5, ferner aufweisend:

Mittel zum Definieren eines (20, 8) linearen Code-Blocks für die Übertragung nur eines Referenzsignals durch Punktieren von Reihen und Spalten eines (32, 10) Reed-Muller-Codes; und
Mittel zum Definieren eines (20, 10) linearen Code-Blocks für ein Referenzsignal und Bestätigung der Übertragung durch Punktieren von Reihen und Spalten eines (32,10) Reed-Muller-Codes welcher ein Cosetbasiertes Code-Entwurf verwendet zum Optimieren des Code-Abstandes zum (20, 8) linearen Code-Block.

8.   Vorrichtung nach Anspruch 5, ferner aufweisend:

der Codierer zum Definieren eines originalen (20, 8) linearen Code-Blocks für die Übertragung nur eines Referenzsignals; und
der Codierer zum Definieren fünf (20, 8) linearen Code-Blocks für jeden Bestätigung-Zustand zum Senden des Referenzsignals durch Finden von vier Cosets, dessen minimale Abstände sind sieben zum originalen (20, 8) linearen Code-Block und dessen minimale Abstände sind sechs zu den anderen vier Cosets.

9.   Verfahren zum Empfangen eines Aufwärtsreferenzsignals mit oder ohne einer Bestätigung welche eine falsche Warnmeldung und Falschdetektion vermeidet, aufweisend:

Definieren einer Vielzahl von Hypothesen zum Dekodieren eines Referenzsignals welches eine Bestätigung umfassen oder nicht umfassen kann;

Übertragen (710) einer Abwärtszuweisung;
Anschließend Empfangen eines kodierten Referenzsignals, welches eine Bestätigung umfassen oder nicht umfassen kann; und
blindes Dekodieren (734) des empfangenen kodierten Referenzsignals durch Verwenden von jedem der Vielzahl der Hypothesen ohne Ambiguität; **kennzeichnet durch**
Empfangen (732) des kodierten Referenzsignals mit oder ohne Bestätigung mit einer Pilotaussparung per Übertragungszeitintervall; und
Definieren einer Hypothese für eine Vielzahl von linearen Code-Blocks in Abständen angeordnet **durch** Coset-basierte Code-Gestaltung zum Unterscheiden zwischen Einbeziehung oder Fehlen einer Bestätigung.

10. Verfahren nach Anspruch 9, ferner aufweisend:

Definieren einer Hypothese für einen (20, 8) linearen Code-Block für die Übertragung nur eines Referenzsignals durch Punktieren von Reihen und Spalten eines (24, 12) Golay-Code; und
Definieren einer Hypothese für einen (20,10) linearen Code Block für ein Referenzsignal mit Bestätigung durch Anwenden einer Coset-basierten Code-Gestaltung zum Optimieren des Code-Abstandes zum (20, 8) linearen Code-Block.

11. Verfahren nach Anspruch 9, ferner aufweisend:

Definieren einer Hypothese für einen (20, 8) linearen Code-Block für die Übertragung nur eines Referenzsignals durch Punktieren von Reihen und Spalten eines (32, 10) Reed-Muller-Codes; und
Definieren einer Hypothese für einen (20, 10) linearen Code-Block für ein Referenzsignal und Bestätigung der Übertragung durch Punktieren von Reihen und Spalten eines (32, 10) Reed-Muller-Codes, welcher eine Coset-basierte Code-Gestaltung anwendet zum Optimieren des Code-Abstandes zum (20, 8) linearen Code Block.

12. Vorrichtung (340) zum Empfangen eines Aufwärtsreferenzsignals mit oder ohne einer Bestätigung, welche eine falsche Warnmeldung und Falschdetektion vermeidet, aufweisend:

Mittel (348) zum Definieren einer Vielzahl von Hypothesen zum Dekodieren eines Referenzsignals welches eine Bestätigung umfassen oder nicht umfassen kann;
Mittel (350) zum Übertragen einer Abwärtszuweisung;
Mittel (352) zum Empfangen anschließend eines kodierten Referenzsignals, welches eine Bestätigung umfassen oder nicht umfassen kann; und
Mittel (354) zum blindes Dekodieren der empfangenen kodierten Referenzsignals durch Verwenden von jeder der Vielzahl der Hypothesen ohne Ambiguität; **kennzeichnet durch**
Mittel zum Empfangen des kodierten Referenzsignals mit oder ohne Bestätigung mit einer Pilotaussparung per

Übertragungszeitintervall; und
das Mittel (348) zum Definieren einer Vielzahl von Hypothesen zum Dekodieren eines Referenzsignals, welches eine Bestätigung umfassen oder nicht umfassen kann, ferner aufweisend
Mittel zum Definieren einer Hypothese für eine Vielzahl von linearen Code-Blocks, die in Abständen angeordnet sind **durch** Coset-basierte Code-Gestaltung zum Unterscheiden zwischen Einbeziehung oder Fehlen einer Bestätigung.

13. Vorrichtung nach Anspruch 12, ferner aufweisend:

der Decodierer zum Definieren einer Hypothese für einen (20, 8) linearen Code-Block für die Übertragung nur eines Referenzsignals durch Punktieren von Reihen und Spalten eines (24, 12) Golay-Codes; und
der Decodierer zum Definieren einer Hypothese für einen (20, 10) linearen Code-Block für ein Referenzsignal mit Bestätigung durch Verwenden einer Coset-basierten Code-Gestaltung zum Optimieren des Code-Abstandes zum (20, 8) linearen Code-Block.

14. Vorrichtung nach Anspruch 12, ferner aufweisend:

der Decodierer zum Definieren einer Hypothese für einen (20, 8) linearen Code-Block für die Übertragung nur eines Referenzsignals durch Punktieren von Reihen und Spalten eines (32, 10) Reed-Muller-Codes; und
der Decodierer zum Definieren einer Hypothese für einen (20, 10) linearen Code-Block für ein Referenzsignal und Bestätigungsübertragung durch Punktieren von Reihen und Spalten eines (32, 10) Reed-Muller-Codes welcher eine Coset-basierte Code-Gestaltung verwendet zum Optimieren des Code-Abstandes zum (20, 8) linearen Code-Block.

15. Ein Computerprogramm-Produkt aufweisend einen Satz von Befehlen zum Ausführen eines Verfahrens gemäß einem der Ansprüche 1 bis 4 und 9 bis 11.

**Revendications**

1. Un procédé (700) d'émission d'un signal de référence de liaison montante avec ou sans acquittement qui évite une fausse alarme et une mauvaise détection, comprenant :

la définition (724) du codage d'un signal de référence et d'un signal de référence et d'un acquittement combinés ;

l'émission du signal de référence codé en réponse à un bloc de ressources planifiées en réponse à l'absence de réception d'une attribution de liaison descendante ; et

l'émission (732) du signal de référence et de l'acquittement combinés codés en réponse à la réception de l'attribution de liaison descendante,

**caractérisé en ce que**

le codage défini assure la détection soit du signal de référence codé soit du signal de référence et de l'acquittement combinés codés par définition d'une pluralité de blocs de code linéaire espacés pour décodage à l'aveugle par une technique de codage à base de co-ensembles pour distinguer l'inclusion ou l'absence de l'acquittement, et

comprenant en outre :

l'émission du signal de référence codé et du signal de référence et de l'acquittement combinés codés avec un espace pilote par intervalle de temps d'émission.

2. Le procédé de la revendication 1, comprenant en outre :

la définition d'un bloc {20, 8} de code linéaire pour une émission de signal de référence seulement par perforation de lignes et de colonnes d'un code {24, 12} Golay ; et

la définition d'un bloc {20, 10} de code linéaire pour un signal de référence avec acquittement par utilisation d'une technique de codage à base de co-ensembles pour optimiser la distance de code par rapport au bloc {20, 8} de code linéaire.

3. Le procédé de la revendication 1, comprenant en outre :

la définition d'un bloc {20, 8} de code linéaire pour une émission de signal de référence seulement par perforation de lignes et de colonnes d'un code {32, 10} Reed-Muller ; et

la définition d'un bloc {20, 10} de code linéaire pour une émission de signal de référence et d'acquittement par perforation de lignes et de colonnes d'un code {32, 10} Reed-Muller en utilisant une technique de codage à base de co-ensembles pour optimiser la distance de code par rapport au bloc {20, 8} de code linéaire.

4. Le procédé de la revendication 1, comprenant en outre :

la définition d'un bloc {20, 8} de code linéaire d'origine pour une émission de signal de référence seulement ; et

la définition de cinq blocs {20, 8} de code linéaire pour chaque état d'acquittement pour envoyer le signal de référence par recherche de quatre co-ensembles dont les distances minimales sont sept par rapport au bloc {20, 8} de code linéaire d'origine et dont les distances minimales sont six par rapport aux autres des quatre co-ensembles.

5. Un dispositif (360) pour l'émission d'un signal de référence de liaison montante avec ou sans acquittement qui évite une fausse alarme et une mauvaise détection, comprenant :

des moyens (368) de définition du codage d'un signal de référence et d'un signal de référence et d'un acquittement combinés ;

des moyens (370) d'émission du signal de référence codé en réponse à un bloc de ressources planifiées en réponse à l'absence de réception d'une attribution de liaison descendante ; et

des moyens (372) d'émission du signal de référence et de l'acquittement combinés codés en réponse à la réception de l'attribution de liaison descendante,

**caractérisé en ce que**

le codage défini assure la détection soit du signal de référence codé soit du signal de référence et de l'acquittement combinés codés, et

comprenant en outre :

des moyens d'émission du signal de référence codé et du signal de référence et de l'acquittement combinés codés avec un espace pilote par intervalle de temps d'émission ; et

dans lequel les moyens (368) de définition du codage d'un signal de référence et d'un signal de référence et d'un acquittement combinés comprennent en outre :

des moyens de définition d'une pluralité de blocs de code linéaire espacés pour décodage à l'aveugle par une technique de codage à base de co-ensembles pour distinguer l'inclusion ou l'absence de l'acquittement

6. Le dispositif de la revendication 5, comprenant en outre :

des moyens de définition d'un bloc {20, 8} de code linéaire pour une émission de signal de référence seulement par perforation de lignes et de colonnes d'un code {24, 12} Golay ; et des moyens de définition d'un bloc {20, 10} de code linéaire pour un signal de référence avec acquittement par utilisation d'une technique de codage à base de co-ensembles pour optimiser la distance de code par rapport au bloc {20, 8} de code linéaire.

7. Le dispositif de la revendication 5, comprenant en outre :

des moyens de définition d'un bloc {20, 8} de code linéaire pour une émission de signal de référence seulement par perforation de lignes et de colonnes d'un code {32, 10} Reed-Muller ; et des moyens de définition d'un bloc {20, 10} de code linéaire pour une émission de signal de référence et d'acquittement par perforation de lignes et de colonnes d'un code {32, 10} Reed-Muller en utilisant une technique de codage à base de co-ensembles pour optimiser la distance de code par rapport au bloc {20, 8} de code linéaire.

8. Le dispositif de la revendication 5, comprenant en outre :

le codeur pour la définition d'un bloc {20, 8} de code linéaire d'origine pour une émission de signal de référence seulement ; et le codeur pour la définition de cinq blocs {20, 8} de code linéaire pour chaque état d'acquittement pour envoyer le signal de référence par recherche de quatre co-ensembles dont les distances minimales sont sept par rapport au bloc {20, 8} de code linéaire d'origine et dont les distances minimales sont six par rapport aux autres des quatre co-ensembles.

9. Un procédé de réception d'un signal de référence de liaison montante avec ou sans un acquittement qui évite des fausses alarmes et une détection erronée, comprenant :

la définition d'une pluralité d'hypothèses de décodage d'un signal de référence qui peut comprendre ou ne pas comprendre d'acquittement ; l'émission (710) d'une attribution de liaison descendante ; la réception subséquente d'un signal de référence codé qui peut comprendre ou ne pas comprendre d'acquittement ; et

le décodage à l'aveugle (734) du signal de référence codé en utilisant chacune de la pluralité d'hypothèses sans ambigüité ;

**caractérisé par** :

la réception (732) du signal de référence codé avec ou sans acquittement avec un espace pilote par intervalle temporel d'émission ; et la définition d'une hypothèse pour une pluralité de blocs de codes linéaires espacés par une technique de codage à base de co-ensembles pour distinguer l'inclusion ou l'absence d'un acquittement.

10. Le procédé de la revendication 9, comprenant en outre :

la définition d'une hypothèse pour un bloc {20, 8} de code linéaire pour une émission de signal de référence seulement par perforation de lignes et de colonnes d'un code {24, 12} Golay ; et l'émission d'une hypothèse pour un bloc {20, 10} de code linéaire pour un signal de référence avec acquittement par utilisation d'une technique de codage à base de co-ensembles pour optimiser la distance de code par rapport au bloc {20, 8} de code linéaire.

11. Le procédé de la revendication 9, comprenant en outre :

la définition d'une hypothèse pour un bloc {20, 8} de code linéaire pour une émission de signal de référence seulement par perforation de lignes et de colonnes d'un code {32, 10} Reed-Muller ; et la définition d'une hypothèse pour un bloc {20, 10} de code linéaire pour une émission de signal de référence et d'acquittement par perforation de lignes et de colonnes d'un code {32, 10} Reed-Muller en utilisant une technique de codage à base de co-ensembles pour optimiser la distance de code par rapport au bloc {20, 8} de code linéaire.

12. Un dispositif (340) de réception d'un signal de référence de liaison montante avec ou sans un acquittement qui évite des fausses alarmes et une détection erronée, comprenant :

des moyens (348) de définition d'une pluralité d'hypothèses de décodage d'un signal de référence qui peut comprendre ou ne pas comprendre d'acquittement ; des moyens (350) d'émission d'une attribution de liaison descendante ; des moyens (352) de réception subséquente d'un signal de référence codé qui peut comprendre ou ne pas comprendre d'acquittement ; et des moyens (354) de décodage à l'aveugle du signal de référence codé en utilisant chacune de la pluralité d'hypothèses sans ambigüité ;

**caractérisé par** :

des moyens de réception du signal de référence codé avec ou sans acquittement avec un espace pilote par intervalle temporel d'émission ; et les moyens (348) de définition d'une pluralité d'hypothèses de décodage d'un signal de référence qui peut comprendre ou ne pas comprendre d'acquittement comprenant en outre :
des moyens de définition d'une hypothèse pour une pluralité de blocs de codes linéaires espacés par une technique de codage à base de co-ensembles pour distinguer l'inclusion ou l'absence d'un acquittement.

13. Le dispositif de la revendication 12, comprenant en outre :

le décodeur pour la définition d'une hypothèse pour un bloc {20, 8} de code linéaire pour une émission de signal de référence seulement par perforation de lignes et de colonnes d'un code {24, 12} Golay ; et
le décodeur pour l'émission d'une hypothèse pour un bloc {20, 10} de code linéaire pour un signal de référence avec acquittement par utilisation d'une technique de codage à base de co-ensembles pour optimiser la distance de code par rapport au bloc {20, 8} de code linéaire.

14. Le dispositif de la revendication 12, comprenant en outre :

le décodeur pour la définition d'une hypothèse pour un bloc {20, 8} de code linéaire pour une émission de signal de référence seulement par perforation de lignes et de colonnes d'un code {32, 10} Reed-Muller ; et
le décodeur pour la définition d'une hypothèse pour un bloc {20, 10} de code linéaire pour une émission de signal de référence et d'acquittement par perforation de lignes et de colonnes d'un code {32, 10} Reed-Muller en utilisant une technique de codage à base de co-ensembles pour optimiser la distance de code par rapport au bloc {20, 8} de code linéaire.

15. Un programme-produit informatique comprenant un jeu de codes pour exécuter un procédé selon l'une des revendications 1 à 14 et 9 à 11.

Fig. 1

UL CQI or CQI+ACK Structure, 2 Pilot Symbols

**Fig. 2**

UL CQI or CQI+ACK Structure for LCP, 1 Pilot Symbol

**Fig. 3**

**Fig. 4**

600

*FIG. 6*

500

*FIG. 5*

700

Transmitter *702*

Receiver *704*

Downlink Assignment *710*

712

Short CP?

Y

Length-2 Walsh Cover (1,1) in 2 Pilot
Symbols to Indicate CQI or CQI+ACK *714*

Transmit 2 pilots, each supporting 6 orthogonally multiplexed
users by cyclic shifting base CAZAC sequence by offset 2's *716*

Walsh Despread & Energy Comparison *718*

Interference Estimation, Channel Estimation,
Data Demodulation, Decoding *720*

Case 1

Facilitate Blind Decoding for CQI or
CQI+ACK With Long CP (1 Pilot) by
Coset Based Code Design *722*

Maximize Code Space Between (m,n) & (m,n+k) *724*

e.g., (24,12) Golay Code Punctured to (20,8), then
(20,10) Found With Max Distance *726*

e.g., (32,10) Reed-Muller Code Punctured to (20,8)
& (20,10) With Max Distance by Coset Code
Design *728*

e.g., Conventional or Tail Biting Convolutional Code
With Max Distance by Coset Code Design *730*

Case 2a

Transmit 8-bit CQI with (20,8) or 10-bit CQI+ACK with (20,10) *732*

Blind Decode (20,8) & (20,10) Hypotheses *734*

Maximize Code Distance Between 5-ACK States *736*

e.g., (24,12) Golay Code Punctured to (20,8), then
4 Cosets Found Min Distance 7 From Original &
Pairwise Distance 6 *738*

Transmit 8-bit CQI with 2-bit Ack Using 1 of 5 (20,8) Codes *740*

Use ML Decoding With 5 Different Offsets *742*

Case 2b

*FIG. 7*

*FIG. 8*

**COMPUTER PLATFORM 340**

Computer-Readable Storage Medium (Memory) 344

Unambiguous PUCCH RX 346

Module for Defining Decoding Hypotheses 348

Module for Transmitting Downlink Assignment 350

Module for Receiving Coded CQI +/- ACK 352

Module for Blind Decoding with Hypotheses 354

PROCESSOR 342

eNode B

**COMPUTER PLATFORM 360**

Computer-Readable Storage Medium (Memory) 364

Unambiguous PUCCH TX 366

Module for Defining Coding for CQI +/- ACK 368

Module for Transmitting Coded CQI W/O RX of DL Assignment 370

Module for Transmitting Coded CQI+ACK W/ RX of DL Assignment 372

User Interface 318

API 318

PROCESSOR 362

800

MME / S-GW 318

MME / S-GW 316

320

104

S1  S1  X2  X2

312

eNode B

310

eNode B

102

326 308

324

322

Reference Signal & Code Book for UL Control Signaling 304

306

**FIG. 9**

EP 2 201 713 B1

**FIG. 10**

**FIG. 11**

EP 2 201 713 B1

**EP 2 201 713 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1811701 A2